# EUROPEAN PATENT SPECIFICATION

(11) **EP 0 598 141 B1**
(45) Date of publication and mention of the grant of the patent: **12.03.1997**
(21) Application number: 92119586.3
(22) Date of filing: 17.11.1992
(51) Int. Cl.: C08B 37/12

(54) **Production process of quick soluble agar**
Herstellungsverfahren von schnelllöslichem Agar
Procédé de production d'agar à dissolution rapide

(43) Date of publication of application: 25.05.1994
(73) Proprietor: SOCIETE D'ETUDE ET DE D'EXPLOITATION D'ALGUES ET PRODUITS MARITIMES ( SETEXAM), Kenitra (MA)
(72) Inventor: Lebbar, Thami, Kenitra (MA); Lebbar, Rachid, Kenitra (MA); Riad, Abdelwahab, Lotissement Sadeka Kenitra (MA)
(74) Representative: Nix, Frank Arnold, Dr.

(56) References cited:
- US-A- 3 901 873
- PATENT ABSTRACTS OF JAPAN vol. 7, no. 61 (C-156)(1206) 15 March 1983 & JP-A-57 208 975
- DATABASE WPIL Section Ch, Week 9140, Derwent Publications Ltd., London, GB; Class D, AN 91-292619 & JP-A-3 195 480

## Description

The present invention is related to a process of obtaining a quick soluble agar-agar. It aims particularly to allow manufacturing an agar-agar that presents the property of being dissolved quickly in hot water at a temperature higher or equal to its gelation point (30°C to 45°C according to the origin of the agar-agar processed by this method).

Agar-agar is a mixture of polysaccharides (agarose + agaropectine) of a high molecular weight between 40.000 and 200.000. Its chemical structure is a dissaccharide composed of β, D, galactopyranose (1->3) linked to (3-6) anhydro, α-L galactopyranose (1->4). It can be also functionalized by sulphate grouping, metoxyl and pyruvat. The position and the proportion of these groupings vary according to the red seaweed used for the extraction (Gelidium, Gracilaria, Pterocladia etc.).

The main property of agar-agar is dissolution in hot water at reflux or in an autoclave under pressure after several minutes of boiling. While cooling, this solution transforms to gel and liquifies if it is heated again.

This thermoreversible gel is characterized by a high hysteresis. The gelification temperature is 36°C ± 4°C or 40°C ± 4°C respectively for agar-agar extracted from Gelidium or Gracilaria. The melting temperature is 85°C ± 5°C.

Agar-agar is obtained by extraction in water from red seaweed species like Gelidium, Gracilaria Pterocladia, Anfheltia, etc. The extraction is carried out by boiling in autoclaves under pressure or in an open tank. The obtained extraction liquor contains about 2% agar-agar. It is filtered and then gelified. The obtained gel is dehydrated either by mechanical pressing through filtering cloth, or by freeze-thawing at minus 20°C that precipitates agar. These two treatments allow to obtain gels of agar-agar with moisture of 60 to 90%, that we call dehydrated agar-agar gel (I) hereinafter. They are dried and ground in order to obtain an agar-agar powder with a moisture of less than 18%, that we call classical agar-agar (II) hereinafter.

It is known that the agar-agar produced by these two procedures independently of the seaweed species dealt with, has characteristics of dissolving that require boiling the agar powder in water during a dozen of minutes to get a complete dissolution and a good gelly strength. This property makes it difficult to use the agar-agar obtained by these two procedures in its main applications as a gelling, thickening and texturing agent.

Many methods were described to solve this problem of dissolution. US-Patent 3 119 697 dated 28.01.1964 describes a treatment that consists in heating a concentrated agar-agar solution of 5 to 8% to which a quantity of a cristallisation controlling agent such as carbohydrate, polyol or a known dispersant is added. This solution is gelified, then dried in hot air. The obtained product dissolves in water at 60°C but since it is a mixture of products, it can be used only in restricted and focused food applications.

G. Pappes paper (Journal of food sciences 52 (2), 467-470, 1987) describes a procedure that consists in drying directly in a rotary vacuum drier agar-agar solutions of 1 to 3% concentration and in recovery of the dried film and grinding it. This procedure allows to obtain an agar-agar with complete dissolution properties at 55°C, but induces high production costs. The same principle is disclosed in the Japanese patent 61025470 dated 02.04.1986. Other patents present other treatment possibilities as described by the European patent 0122289 dated 12.10.1983 consisting of a treatment of agar-agar powder with non-equilibrium plasma whereas the Japanese patent 1153067 dated 15.06.1989 consists in treating an agar-agar gel by quick freezing.

This invention describes a new procedure for the obtention of agar-agar that has quick dissolution properties in water at temperatures higher than its gelification temperature (36°C ± 4°C for the agar extracted from Gelidium, 40°C ± 4°C for agar extracted from Gracilaria). The object of the invention is to reduce the production costs in relation to the production costs of the previously existing procedures described and known in the art. Another object is to implement this new procedure in conventional agar-agar production process lines or to use this procedure independently by using as raw material the classical agar-agar powder (II).

Another object is to produce a quick soluble agar-agar of a similar chemical composition to that of classical agar-agar (II).

This procedure can also be applied to treat some product mixtures as a basic raw material since the final product has quick dissolution properties.

The quick soluble agar-agar obtention procedure according to the invention consists in treating classical agar-agar powder (II) or granules of dehydrated agar gel (I), with mixing principally with water and with other products if needed by passing through a mono-screw or twin-screw extruder. The screw configuration, its speed and its temperature are explained in the description hereafter.

The process for obtaining an agar-agar with quick dissolution properties according to the invention is carried out by processing classical agar-agar in the form of dried powder or granules of dehydrated agar gel obtained from the stage of mechanical pressing or from the stage of freeze-thawing through a twin-screw extruder or a single-screw extruder such that the die plate of the extruder is kept at a temperature between 118°C and 170°C.

Preferrably, the agar-agar is mixed with other products such as the locust bean, the gum-guar, sugar or peptone in relative proportions from 0 to 50 %.

In a preferred variant of the process, the extruder has a screw configuration including mechanical parts that induce high friction and high mechanical shear, and a maximum screw speed of 600 rpm.

An expedient feature is to feed liquid water or steam at the first extrusion stage in proportions between 0 and 70 % in relation to the total introduced dry matter.

It is further preferred that the extruded product is dried either under cold or hot air until a moisture rate between 5 and 18 % is obtained.

Experiments showed that such a procedure produces an agar-agar with quick dissolution properties in water at temperatures higher than its gelation point.

The man of art knows that the actual processing methods of agar-agar production include a stage where agar-agar extraction liquor is cooled and gelified. During this cooling stage, molecules get a double helix conformation forming a tridimensional network including water. The following production stages do not alter this order. Thus, the classical agar-agar needs energy by heating until boiling for about 10 minutes so as to dissolve completely.

During the extrusion operation according to the invention, the mechanical shear applied by the extruder screw supplies the necessary energy for modifying the molecular conformation of the classical agar-agar (II) in spite of the high proportion of the introduced dry matter. This takes place even with a small quantity of water from 10% in relation to the total quantity of introduced agar-agar.

It is remarkable that the extrusion of classical agar-agar powder (II), in spite of the high proportion of dry matter, allows the obtention of an agar-agar that dissolves quickly in hot water. The unexpected characteristic of this phenomenon is enhanced by the fact that it takes place without notable degradation of the product which keeps all its gelifying properties. This phenomenon is also obtained even if we use classical agar-agar powder (II) or dehydrated agar gel granules (I) obtained from the mechanical pressing step, or the freeze-thawing stage. This is even noted for the classical agar (II) mixtures with other ingredients such as sugar, locust bean gum, guar or peptons in proportions from 0 to 50%. This phenomenon of solubilisation is still improved by the adjunction in relative proportions from 0 to 10% of dispersant products as the lecithine or its derivative the metarine (produced by Lucas Meyer, Germany), the fatty acids as the glycerol monostearate, and the organic silicones as trichlorosilanes acetyl or the like.

Here is the general description of experimentations followed by some examples of the invention's application:
- The classical agar-agar (II) in the form of dried powder with a moisture of less than 20%, or granules of the dehydrated agar gel (I) having a moisture between 50 and 80%, are introduced in the extruder with a volumetric feeder system. A scaling pump introduces water right after the powder. A gradient of temperature is programmed for the different zones of the extruder barrel for values between 20°C and 170°C.
   The speed of the screw is selected to obtain the needed flux for the extruded product.

The screw configuration of the twin-screw extruder may vary according to the power of the mechanical shear we want to apply. We have noted that a minimal configuration similar to a no-ending screw, allows modifying the dissolution properties of agar-agar. This explains that the single-screw extruder presents in this case the same advantages as the twin-screw extruder. The product is then extruded and passes through a selected die and is then cut with a rotary knife. The product can then be subjected to a drying stage with cold or hot air. It is then pulverized to be presented in powder form. The analyses done before and after extrusion are:
- Measurement of the gelly strength by NIKAN method (applied on stored gels during 12 h à 20°C, prepared from 500 ml of a solution of 1,5% of agar-agar dissolved by heating under reflux during 10 mn).
- Moisture determination.

### Example 1:

A twin-screw extruder is used with a screw diameter of 50 mm, a barrel length of 750 mm, and where the screw configuration is composed of 4 feed-screw 50,8 mm (2''), 2 short pitch 50,8 mm (2''), 4 feed-screw 50,8 mm (2''), 1 feed-screw 76.2 mm (3''), 2 single lead 50,8 mm (2''), 1 feed-screw 76mm (3'').
- The speed of screw is 400 rpm.
- The feed rate of agar-agar powder extracted from Gelidium is 100 kg/h. The water flux is 40 kg/h. The initial gelly strength of this agar is 850 g/cm² and its moisture is 16%.
- The die is constituted of 3 holes of 6 mm, the temperature of the die plate is 120°C, the pressure 60 bars, and the moisture 31%.
- Moisture after drying in an open air area during 10 min of the obtained granules is 15%.
The obtained agar-agar powder after pulverization dissolves in less than one minute at 80°C and less than 2 minutes under agitation at 40°C. Its gelly strength is 700 g/cm².

### Example 2:

The same apparatus as described in example 1 is used. The granules of dehydrated agar-agar gel (I) extracted from Gelidium of 60% moisture obtained after a stage of mechanical pressing are introduced at 200 kg/hr. No water is added. The temperature at the die plate is 120°C, the pressure 38 bars and the moisture 50%. The cut product is dried during 15 min under hot air at 80°C.
The powder of the extruded agar-agar is soluble instantaneously at 70°C and in less than two minutes under agitation at 40°C. Its gelly strength is 700 g/cm² and its moisture is 14%.

### Example 3:

The same apparatus as described in example 1 is used. Agar-agar powder extracted from Gracilaria is introduced at 90 kg/hr, its gelly strength is 900 g/cm² and its moisture 18%. Water flux is 45 l/h, the temperature at the die plate is 118°C, the pressure is 52 bars and the moisture is 32%.
The extruded product is stocked at room temperature during 24 h. Its moisture decreases to 22%. After pulverizing, it dissolves instantaneously at 80°C and less than two minutes under agitation at 50°C. Its gelly strength is 800 g/cm² and its moisture 19%.

### Example 4:

A single-screw extruder is used which has a screw diameter of 90 mm and a barrel length of 620 mm. The screw configuration is composed of 1 single-flight screw and of 5 double-flight screws. The speed of the screw is 300 rpm.
The die is composed of 4 mm diameter holes.
The feed of agar-agar powder (II) extracted from Gelidium is 130 kg/h. Its gelly strength is 850 g/cm², and its moisture is 13%. Water is introduced at a flux of 35 l/h.
The temperature at the die plate is 125°C and the pressure is 65 bars. The product is cut and dried during 15 min under a flux of hot air at 90°C, then pulverized. The obtained powder dissolves rapidly at 90°C and at 45°C under weak agitation. Its gelly strength is 730 g/cm², its moisture is 9%.

### Example 5 :

The same apparatus as described in example 1 is used. The agar-agar powder (II) is mixed dry beforehand with locust bean gum in a ratio of 9 to 1. The gelly strength of this mixture is 900 g/cm², its moisture is 15%. The feed of this mixture is 80 kg/h, the quantity of the injected water is 25 l/h. The temperature at the die plate is 150°C, the pressure is 71 bars. The product is stocked at a room temperature during 4 h, then pulverized. Its humidity is 14% and its gelly strength is 750 g/h. The obtained powder dissolves instantaneously at 80°C and under weak agitation at 45°C.

### Example 6:

The same apparatus as described in example 1 is used. The agar-agar powder (II) extracted from Gelidium is mixed dry beforehand with iced-sugar in proportions of 7 to 3.
The mixture has 10% moisture and a gelly strength of 750 g/cm². It is introduced with a flux of 100 kg/h. The flux of water is 40 l/h.
The temperature at the die plate is 118°C, the pressure 35 bars, and moisture 35%.
The product is dried under a flux of cold open air at 25°C during 15 min. The final moisture is 8%. The pulverized product dissolves instantaneously at 80°C and under strong agitation at 38°C.

### Example 7:

The same apparatus as described in example 1 is used. Agar-agar powder (II) extracted from Gelidium with a gelly strength of 600 g/cm² and a moisture of 10% is introduced in a debit of 100 kg/h. Water containing a suspension of 4% of metarine is introduced at a flux of 25 l/h.
The temperature at the die plate is 126°C, the pressure is 47 bars, and moisture is 27%.
The product is stocked at a room temperature during 12 h, then pulverized. Its moisture is 13% and its gelly strength is 510 g/cm². This product dissolves instantaneously at 80°C rather than at 38°C.

### Example 8:

A twin-screw extruder is used with a screw diameter of 50 mm and with a barrel length of 750 mm. The screw configuration is composed of:
- 5 feed-screw 50,8 mm (2''), 7 x 30° forward paddle, 2 feed-screw 50,8 mm (2''), 7 x 60°
   Forward paddle, 1 single lead 50,8 mm (2''), 1 single lead 25,4 mm (1''), 7 x 60°. Forward paddle, 1 single lead 50,8 mm (2'').
- The speed of the screw is 300 rpm.
- The feed of agar-agar powder (II) extracted from Gelidium is 80 kg/hr; The debit of water is 25 l/h, its gelly strength is 750 g/cm² and its moisture is 12%.
- The die is constituted of 2 holes of 8 mm. The temperature at the die plate is 170°C, the pressure is 80 bars and moisture 17%.
- The obtained agar-agar powder after pulverization dissolves in less than a minute at 70°C and in less than two minutes under agitation at 50°C. The gelly strength is 400 g/cm² and its moisture is 17%.

## Claims

1. The process for obtaining an agar-agar with quick dissolution properties,
characterized by processing classical agar-agar in the form of dried powder or granules of dehydrated agar gel obtained from the stage of mechanical pressing or from the stage of freeze-thawing through a twin-screw extruder or a single-screw extruder such that the die plate of the extruder is kept at a temperature between 118°C and 170°C.

2. A process according to claim 1, characterized in that the agar-agar is mixed with other products such as the locust bean, the gum-guar, sugar or peptone in relative proportions from 0 to 50 %.

3. A process according to claims 1, 2, characterized in that the extruder has a screw configuration including mechanical parts that induce high friction and high mechanical shear, and a maximum screw speed of 600 rpm.

4. A process according to claims 1, 2, 3, characterized in that liquid water or steam is fed at the first extrusion stage in proportions between 0 and 70 % in relation to the total introduced dry matter.

5. A process according to claims 1, 2, 3, 4, characterized in that the extruded product is dried either under cold or hot air until a moisture rate between 5 and 18 % is obtained.

## Patentansprüche

1. Verfahren zur Herstellung von schnellöslichem Agar-Agar, gekennzeichnet durch die Verarbeitung von klassischem Agar-Agar in Form von getrocknetem Pulver oder von Granalien eines dehydrierten Agar-Gels, das erhalten ist aus einem Verarbeitungsschritt des mechanischen Pressens oder aus einem Verarbeitungsschritt des Ausfrierens-Auftauens, in einem Doppelschraubenextruder oder einem Einschraubenextruder, wobei die Mundstückplatte des Extruders auf einerTemperatur zwischen 118°C und 170°C gehalten wird.

2. Verfahren nach Anspruch 1, dadurch gekennzeichnet, daß das Agar-Agar gemischt wird mit weiteren Produkten wie Johannisbrot-Gummiharz, Guar-Gummiharz, Zucker oder Pepton in relativen Proportionen von 0 bis 50%.

3. Verfahren nach Ansprüchen 1, 2, dadurch gekennzeichnet, daß der Extruder eine Schraubenkonfiguration mit hohe Reibung und große mechanische Scherwirkungen erzeugenden mechanischen Teilen und eine maximale Schraubendrehzahl von 600 U/min aufweist.

4. Verfahren nach Ansprüchen 1, 2, 3, dadurch gekennzeichnet, daß in das erste Extrusionsstadium flüssiges Wasser oder Dampf in einem Mengenverhältnis zwischen 0 und 70% zur gesamten eingeführten Trockenmasse zugespeist wird.

5. Verfahren nach Ansprüchen 1, 2, 3, 4, dadurch gekennzeichnet, daß das extrudierte Produkt unter kalter oder warmer Luft getrocknet wird, bis ein Feuchtigkeitsgrad zwischen 5 und 18% erhalten ist.

## Revendications

1. Un procédé d'obtention d'agar-agar avec des propriétés de dissolution rapide est caractérisé par le traitement d'agar-agar classique sous forme de poudre séche ou granulés de gel d'agar deshydraté obtenu durant le stade de pressage mécanique ou durant le stade de congélation-décongélation à travers un extrudeur mono-vis ou double-vis d'une manière que la filière de l'extrudeur soit gardée à une température entre 118°C et 170°C.

2. Un procédé selon la revendication n° 1, caractérisé par le fait que l'agar est mélangé avec d'autres produits tels que la gomme de caroube, gomme de guar, sucre ou peptone dans des proportions relatives qui varient de 0 à 50%.

3. Un procédé suivant les revendications 1 et 2 caractérisé par le fait que l'extrudeur a une forme de vis incluant des pièces mécaniques qui induisent une grande friction, un grand cisaillement mécanique et une vitesse maximale de 600 tour par minute.

4. Un procédé suivant les revendications 1, 2 et 3 caractérisé par l'addition d'eau ou de vapeur au premier stade d'extrusion à des proportions entre 0 et 70% suivant la matière sèche introduite.

5. Un procédé suivant les revendications 1, 2, 3 et 4 caractérisé par le fait que le produit extrudé est séché par air froid ou air chaud jusqu'à ce que un taux d'humidité compris entre 5 et 18% soit obtenu.
